# EUROPÄISCHE PATENTSCHRIFT

(11) **EP 2 243 643 B1**
(45) Veröffentlichungstag und Bekanntmachung des Hinweises auf die Patenterteilung: **08.02.2012**
(21) Anmeldenummer: 09005737.3
(22) Anmeldetag: 24.04.2009
(51) Int. Cl.: B60D 5/00, B61D 17/22, B62D 47/02

(54) **Balg oder Balghälfte eines Übergangs zwischen zwei gelenkig miteinander verbundenen Fahrzeugen**
Gaiter or half gaiter for the intersection of two vehicles with a jointed connection
Soufflet ou moitié de soufflet d'un passage entre deux véhicules liés de manière articulée

(43) Veröffentlichungstag der Anmeldung: 27.10.2010
(73) Patentinhaber: Hübner GmbH, 34123 Kassel (DE)
(72) Erfinder: Goebels, André, 34134 Kassel (DE); Dilcher, Dietmar, 34246 Vellmar (DE)
(74) Vertreter: Walther, Walther & Hinz GbR

(56) Entgegenhaltungen:
- EP-A1- 0 329 031
- DE-U1-202008 011 308
- US-A- 2 179 432
- US-A1- 2002 066 293
- US-A1- 2004 076 464

## Beschreibung

Balg oder Balghälfte eines Übergangs zwischen zwei gelenkig miteinander verbundenen Fahrzeugen, wobei der Balg oder die Balghälfte einen Kuppelrahmen zur Kupplung mit der Stirnseite eines Fahrzeugs oder zur Kupplung mit einem weiteren Kuppelrahmen einer weiteren Balghälfte aufweist, wobei der Kuppelrahmen umfangsverteilt mehrere Kupplungseinrichtungen aufweist, die einzeln betätigbar sind.

Bälge eines Übergangs sind als Falten- oder Wellenbälge bekannt; sie sind tunnelartig ausgebildet und umschließen üblicherweise zumindest die Übergangsbrücke oder die Plattform zwischen zwei gelenkig miteinander verbundenen Fahrzeugen. Die Bälge können ein- oder zweiteilig ausgebildet sein, wobei in jedem Fall eine Verbindung von dem Balgende zur Stirnwand des Fahrzeugs vorgesehen ist. Bei einem zweiteiligen Balg sind mittig zwei Kuppelrahmen vorgesehen, durch die die Balghälften miteinander kuppelbar sind. Die Erfindung bezieht sich sowohl auf einen Balg, der mit der Stirnseite des Fahrzeugs kuppelbar ist, als auch auf eine Ausführungsform eines Balges mit zwei Balghälften, die mittig durch Kuppelrahmen miteinander verbindbar sind.

Aus dem Stand der Technik gemäß der EP 0 329 031 ist bekannt, zur Kupplung zweier Balghälften die beiden Balghälften jeweils mit einem Kuppelrahmen zu versehen. Die Kuppelrahmen sind durch Verriegelungsglieder und Widerlager miteinander verriegelbar, wobei die Verriegelungsglieder über eine gemeinsame Schubstange miteinander in Verbindung stehen, die durch einen Kniehebelmechanismus betätigbar ist. Das heißt, dass bei Betätigung des Kniehebelmechanismus sämtliche Riegelglieder in oder außer Eingriff mit den entsprechenden Widerlagern des jeweils anderen Kuppelrahmens gebracht werden. Eine solche Verriegelungsvorrichtung ist für den Fall gedacht, dass die Ent- bzw. Verriegelung in bestimmten zeitlichen Abständen vorgenommen werden soll, d. h., dass der Balg regelmäßig vom Fahrzeug getrennt und wieder angeschlossen werden soll. Mit einer solchen Verriegelungsvorrichtung ist dies in einfacher Weise machbar. Allerdings ist der Aufwand für eine solche synchrone Verriegelung relative hoch, weshalb auch die Kosten für eine solche Verriegelung zu einer nicht unerheblichen Verteuerung des Balges führen.

Geht man davon aus, dass jedoch das Lösen eines Balges vom Fahrzeug bzw. auch ein Entkuppeln von Fahrzeugen verhältnismäßig gesehen selten vorkommt, würde eine weniger aufwendige Verriegelung durchaus zu einer Kostenersparnis führen.

In diesem Zusammenhang ist aus der DE 20 2008 011 308 U1, welche den Oberbegriff des Anspruchs 1 zeigt, ein Verriegelungsmechanismus bekannt, der davon ausgeht, dass die einzelnen Riegelelemente, die an einem Kuppelrahmen befestigt sind, jeweils einzeln betätigbar sind. Im Einzelnen sind hierbei schwenkbare Verriegelungselemente vorgesehen, die mit entsprechenden Widerlageelementen zusammenwirken. Die Verriegelung erfolgt hierbei über einen Winkel von 180°, um eine sogenannte Totpunktverriegelung zu bewerkstelligen. Die aus dem Stand der Technik bekannte Vorrichtung zur Verriegelung ist mechanisch sehr aufwendig und damit teuer.

Eine Kupplungseinrichtung, die wesentlich einfacher ausgebildet ist, und die ebenfalls einzeln zu betätigen ist, zeichnet sich erfindungsgemäß dadurch aus, dass die Kupplungseinrichtung ein Schwenkglied aufweist, wobei das Schwenkglied eine Exenterführung zur Aufnahme des Kugelkopfes eines Kupplungsbolzens aufweist, wobei nach Verdrehung des Schwenkgliedes um circa 180° der Kupplungsbolzen, der zum Beispiel an der Stirnwand des Fahrzeugs oder einem Kuppelrahmen befestigt ist, in den Kuppelrahmen eingezogen und verriegelt ist. Hieraus wird deutlich, dass zur Verriegelung schlussendlich lediglich zwei Riegelelemente erforderlich sind, nämlich ein Schwenkglied und ein Kupplungsbolzen mit einem Kugelkopf. Das Schwenkglied, das walzenförmig ausgebildet, und bevorzugt an einem stirnseitigen Ende einen Ansatz beispielsweise in Form eines Vierkantes zum Ansetzen eines Werkzeuges aufweist, kann als Gussteil preiswert hergestellt werden. Ein Kupplungsbolzen mit einem Kugelkopf ist ein Zukaufteil und insofern ebenfalls preiswert erhältlich. Angeordnet ist das Schwenkglied in dem Kuppelrahmen, wobei das Schwenkglied zu Montagezwecken mit einer Montageplatte versehen ist, die an dem Kuppelrahmen montiert wird.

Im Einzelnen ist in Bezug auf die Exenterführung ein Langloch im Durchmesser des Kugelkopfes des Kupplungsbolzens vorgesehen, an das sich ein kugelförmiges Nest zur Aufnahme des Kugelkopfes anschließt, wobei das Nest außermittig zur Mittellängsachse in dem Schwenkglied angeordnet ist, wobei zu beiden Seiten des Langloches und des Nestes Backen vorgesehen sind, die sich über einen Teil des Durchmessers des Kugelkopfes erstrecken, also den Kugelkopf zumindest partiell gabelförmig überdecken. Hieraus wird deutlich, dass nach Einführen des Kugelkopfes durch das Langloch in das sich an das Langloch anschließende Nest bei Verdrehen des Schwenkgliedes die zu beiden Seiten des Langloches und des Nestes angeordneten Backen im Schwenkglied den Kugelkopf des Kupplungsbolzens gabelförmig erfassen, und dadurch, dass das Nest außermittig zur Mittellängsachse des walzenförmigen Schwenkgliedes angeordnet ist, bei Verdrehen des Schwenkgliedes der Kugelkopf des Kupplungsbolzens durch die Backen erfasst und nicht nur eingezogen wird, sondern nach einer Drehung größer 180° auch über den Totpunkt verriegelt ist.

Im Einzelnen liegt das Nest im entriegelten Zustand näher zu dem zu kuppelnden, benachbarten Kuppelrahmen oder der Stirnseite des Fahrzeugs, als an der Seite zu dem Balg zu, aber außermittig in Richtung des zu kuppelnden, benachbarten Kuppelrahmen. Das bedeutet, dass während des Verriegelungsvorgangs der Kuppelrahmen auf die Stirnseite des Fahrzeugs zugezogen wird.

Zum Zwecke der Abdichtung besitzt der Kuppelrahmen Dichtungen, die im verriegelten Zustand für eine Abdichtung zwischen Kuppelrahmen einerseits und Stirnseite des Fahrzeugs andererseits dienen.

Dass, was zuvor in Bezug auf die Kupplung des Balges an der Stirnseite des Fahrzeugs beschrieben worden ist, gilt gleichermaßen auch für die Kupplung zweier Balghälften. Hierbei ist in dem einen Kuppelrahmen das an der Montageplatte angeordnete Schwenkglied befestigt, wohingegen an dem anderen Kuppelrahmen der Kupplungsbolzen mit dem Kugelkopf befestigt ist. Bei Zusammenfahren der beiden Kuppelrahmen wird der Kugelkopf des Kupplungsbolzens durch das Langloch bis in das Nest geführt, wobei dann nach Verdrehen des Schwenkgliedes die beiden Kuppelrahmen miteinander verkuppelt sind. Vorteilhaft hierbei ist, dass der Kupplungsbolzen mit dem Kugelkopf nicht nur die Verriegelung darstellt, sondern auch als Zentriermittel dient. An dieser Stelle sei darauf hingewiesen, dass die zuvor beschriebene Verriegelungsvorrichtung mehrfach umfangsverteilt an dem Kuppelrahmen angeordnet ist, um eine gleichmäßige Anlage des Kuppelrahmens entweder an der Stirnseite des Fahrzeugs zu ermöglichen. oder aber an dem entsprechenden Kuppelrahmen der anderen Balghälfte.

Nach einem weiteren Merkmal der Erfindung ist vorgesehen, dass der Kuppelrahmen mindestens eine Halterung für den Balg aufweist. Die Halterung kann hierbei im Querschnitt schnabelartig ausgebildet sein, um den Balg klemmend zu erfassen.

Anhand der Zeichnungen wird die Erfindung nachstehend beispielhaft näher erläutert.
- Figur 1: zeigt schematisch die Anordnung eines Balges zwischen gelenkig miteinander verbundenen Fahrzeugen;
- Figur 2: zeigt eine Ansicht auf die Stirnwand eines Fahrzeugs entsprechend dem Schnitt II - II aus Figur 1;
- Figur 3: zeigt eine Ansicht auf eine Kupplungseinrichtung im mit der Stirnwand des Fahrzeugs gekuppelten Zustand;
- Figur 4: zeigt perspektivisch in Explosionsdarstellung die Kupplungseinrichtung mit dem Kuppelrahmen;
- Figur 5: zeigt eine Ansicht auf die Kupplungseinrichtung im eingeführten Zustand des Kupplungsbolzen, aber im unverriegelten Zustand von der Seite im Schnitt;
- Figur 6: zeigt eine Darstellung gemäß Figur 5 im verriegelten Zustand ebenfalls im Schnitt.

Die beiden gelenkig miteinander verbundenen Fahrzeuge 1 und 2 zeigen einen Übergang 3 mit einem Balg 4.

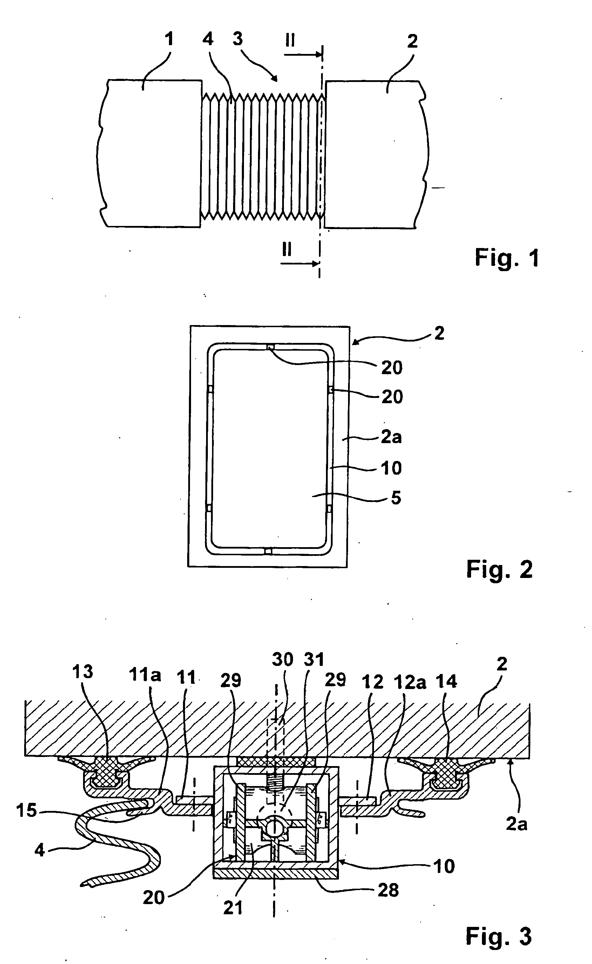

Gegenstand der Erfindung ist die Anordnung des Balges des Übergangs an der Stirnseite des Fahrzeugs. Es wird darauf hingewiesen, dass die nachstehenden Ausführungen in gleicher Weise auch für die Kupplung zweier Kuppelrahmen zweier Balghälften gelten. Gemäß Figur 2 ist eine Ansicht auf die Stirnwand des Fahrzeugs 2 erkennbar, wobei der Kuppelrahmen 10 schematisch, der im Querschnitt im Wesentlichen kastenförmig ausgebildet ist, im gekuppelten Zustand mit der Stirnwand 2a des Fahrzeugs 2 dargestellt ist. Mittig ist die Durchgangsöffnung 5 erkennbar. Erkennbar ist ebenfalls aus Figur 2 die umfangsverteilte Anordnung der Kupplungseinrichtungen 20 in dem Kuppelrahmen.

Aus Figur 3 ist der Kuppelrahmen 10 im Schnitt erkennbar, wobei der Kuppelrahmen 10 die Kupplungseinrichtung 20 mit der Montageplatte 28 aufnimmt. An der Stirnwand 2a des Fahrzeugs 2 ist der Kupplungsbolzen 30 mit dem Kugelkopf 31 befestigt, wobei der Kugelkopf 31 in Figur 3 gestrichelt dargestellt, also verdeckt ist, da er von dem Schwenkglied 21 aufgenommen und, wie beschrieben, verdeckt ist. Der Kuppelrahmen 10 besitzt zu beiden Enden jeweils Flügel 11 und 12, an denen Arme 11 a und 12a angeordnet sind, die einerseits Dichtungen 13, 14 aufnehmen, wobei andererseits der Arm 11a zumindest eine im Querschnitt U-förmige schnabelartige Klammer 15 zur Aufnahme des Balges 4 aufweist.

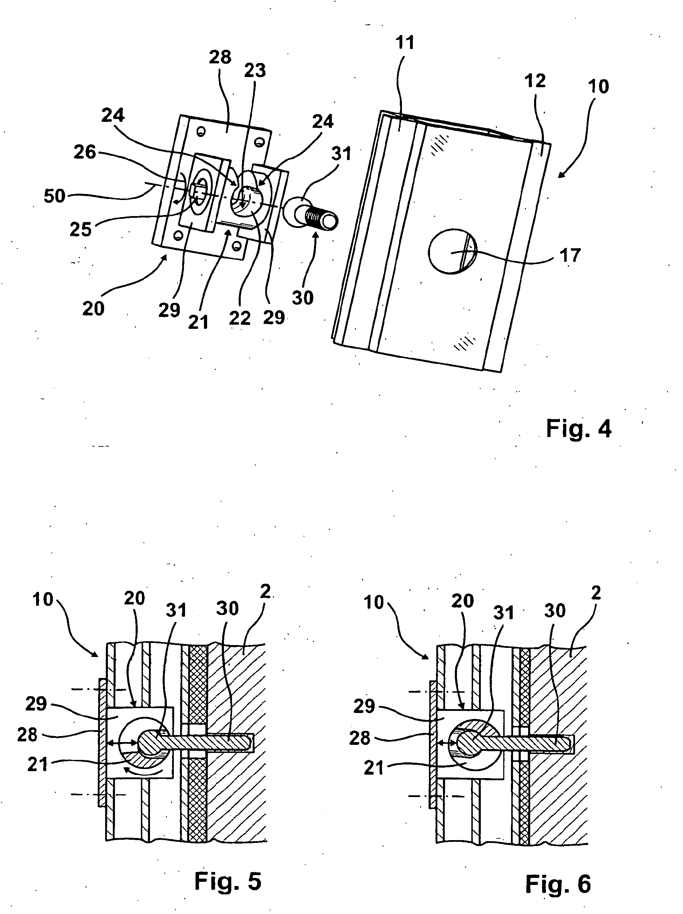

Die Funktionsweise der Kupplungseinrichtung 20 ergibt sich im Einzelnen insbesondere aus Figur 4. Die Kupplungseinrichtung 20 umfasst die Montageplatte 28 mit dem Lagerbock 29 zur drehbaren oder schwenkbaren Aufnahme des Schwenkgliedes 21. Der Kupplungsbolzen 30 mit dem Kugelkopf 31 ragt durch die Öffnung 17 des Kuppelrahmens 10 mit seinem Gewinde hindurch und ist beispielsweise an der Stirnwand 2a des Fahrzeugs 2 befestigt. Das Schwenkglied 21 besitzt das Langloch 22, an das sich das Nest 23 anschließt. In dieses Nest wird der Kugelkopf 31 des Kupplungsbolzens eingeführt. Zu beiden Seiten des Langloches 22 und des Nestes 23 befinden sich Backen 24, die den Kugelkopf 31 des Kupplungsbolzens 30 gabelförmig zumindest partiell überdecken. In jedem Fall ist sicherzustellen, dass der Abstand zwischen den beiden Backen 24 zumindest gleich dem Durchmesser des Bolzens des Kupplungsbolzens 30 ist. Die Backen 24 und das außermittig angeordnete Nest 23 in dem Schwenkglied 21 bilden somit eine Exzenterführung zusammen mit dem Lagerbock 22 zur Durchführung des Kugelkopfes 31.

Befindet sich nunmehr der Kugelkopf 31 in dem Nest 23, dann wird mit Hilfe eines an dem Vierkant 25 anzusetzenden Werkzeuges das Schwenkglied 21 in Richtung des Pfeiles 26 verdreht. Da sich das Nest 23 außerhalb der Mittellängsachse 50, die durch den Ansatz 25 verläuft, liegt, und zwar in Richtung auf den Kuppelrahmen 10 zu, wird dann, wenn das Schwenkglied 21 in Richtung des Pfeiles 26 verdreht wird, der Kuppelrahmen auf die Stirnwand 2a des Fahrzeugs 2 zugezogen. Denn durch die Verschwenkung des Schwenkgliedes 21 mit dem Nest 23 wird das Nest, das zuvor näher zu dem Kuppelrahmen 10 lag, nach der 180° Drehung näher zu der Montageplatte 28 liegen, was - wie bereits ausgeführt - dafür sorgt, dass der Kugelkopf des Kupplungsbolzens eingezogen wird, mithin, weil der Kupplungsbolzen mit seinem Gewinde an der Stirnwand befestigt ist, der Kuppelrahmen an die Stirnwand angezogen.

Der Vorgang des Verschwenkens mit dem Anziehen des Kuppelrahmens 10 an die Stirnwand ergibt sich im einzelnen auch noch einmal in Anschauung der Figuren 5 und 6. Figur 5 zeigt hierbei das Einziehen des Kupplungsbolzens mit dem Kugelkopf in dem Nest 23 im unverriegelten Zustand in einer Darstellung im Schnitt von der Seite, wohingegen Figur 6 ihn im verriegelten Zustand zeigt. Das heißt, der Unterschied zwischen der Darstellung gemäß Figur 5 und Figur 6 liegt in der Verschwenkung des Schwenkgliedes um 180°.

## Patentansprüche

1. Balg oder Balghälfte eines Übergangs zwischen zwei gelenkig miteinander verbundenen Fahrzeugen, wobei der Balg (4) einen Kuppelrahmen (10) zur Kupplung mit der Stirnseite eines Fahrzeugs oder zur Kupplung mit einem weiteren Kuppelrahmen (10) aufweist, wobei der Kuppelrahmen (10) umfangsverteilt mehrere Kupplungseinrichtungen (20) aufweist, die einzeln betätigbar sind, wobei die Kupplungseinrichtung (20) ein Schwenkglied (21) aufweist, **dadurch gekennzeichnet, daß** das Schwenkglied (21) eine Exzenterführung (22, 23, 24) zur Aufnahme des Kugelkopfes (31) eines Kupplungsbolzens (30) aufweist, wobei nach Verdrehung des Schwenkgliedes (21) um circa 180° der Kupplungsbolzen (30) in den Kuppelrahmen (10) eingezogen und verriegelt ist.

2. Balg oder Balghälfte nach Anspruch 1,
**dadurch gekennzeichnet,**
**dass** die Exzenterführung ein Langloch (22) im Durchmesser des Kugelkopfes (31) des Kupplungsbolzens (30) aufweist, an das sich ein kugelförmiges Nest (23) zur Aufnahme des Kugelkopfes (31) anschließt, wobei das Nest (23) außermittig zur Mittellängsachse (50) in dem Schwenkglied (21) angeordnet ist, wobei zu beiden Seiten des Langloches (22) und des Nestes (23) Backen (24) vorgesehen sind, die sich über einen Teil des Durchmessers des Kugelkopfes (31) erstrecken, also den Kugelkopf (31) zumindest partiell gabelförmig überdecken.

3. Balg oder Balghälfte nach einem der voranstehenden Ansprüche,
**dadurch gekennzeichnet,**
**dass** im entriegelten Zustand das Nest (23) näher zu dem zu kuppelnden, benachbarten Kuppelrahmen (10) oder der Stirnseite (2a) des Fahrzeugs (2) liegt, als zu der Seite des Balges (4).

4. Balg oder Balghälfte nach einem der vorangehenden Ansprüche,
**dadurch gekennzeichnet,**
**dass** das Schwenkglied (21) einen Betätigungsansatz (25), z. B. einen Vierkant, für ein entsprechendes Werkzeug aufweist.

5. Balg oder Balghälfte nach einem der vorangehenden Ansprüche,
**dadurch gekennzeichnet,**
**dass** der Kuppelrahmen (10) mindestens eine Halterung (11a) für den Balg (4) aufweist.

6. Balg oder Balghälfte nach Anspruch 5,
**dadurch gekennzeichnet,**
**dass** die Halterung (11a) ein Dichtungsprofil (13) aufweist.

## Claims

1. A bellows or half bellows for the intersection of two vehicles with a jointed connection, with the bellows (4) comprising a coupling frame (10) for coupling with the front side of a vehicle or for coupling with another coupling frame (10), with the coupling frame (10) comprising several coupling devices (20) distributed around its periphery, which can be individually operated, with the coupling device (20) comprising a pivotal member (21), **characterized in that** the pivotal member (21) comprises an eccentric guidance (22, 23, 24) in order to receive the ball end (31) of a coupling pin (30), with the coupling pin (30) after twisting of the pivotal member (21) by approx. 180° being retracted into the coupling frame (10) and locked.

2. A bellows or half bellows according to claim 1,
**characterized in**
**that** the eccentric guidance comprises a long hole (22) with the diameter of the ball end (31) of the coupling pin (30) to which a spherical cavity (23) for receiving the ball end (31) is connected, with the cavity (23) being located eccentrically to the longitudinal central axis (50) in the pivotal member (21), with jaws (24) being provided on both sides of the long hole (22) and the cavity (23), which extend over a part of the diameter of the ball end (31), thus covering the ball end (31) at least partially and in a bifurcated way.

3. A bellows or half bellows according to any one of the preceding claims,
**characterized in**
**that** in the unlocked condition the cavity (23) is closer to the coupling, adjacent coupling frame (10) or the front side (2a) of the vehicle (2) than to the side of the bellows (4).

4. A bellows or half bellows according to any one of the preceding claims,
**characterized in**
**that** the pivotal member (21) comprises an actuation attachment (25), e.g. a square, for a corresponding tool.

5. A bellows or half bellows according to any one of the preceding claims,
**characterized in**
**that** the coupling frame (10) comprises at least one holder (11a) for the bellows (4).

6. A bellows or half bellows according to claim 5,
**characterized in**
**that** the holder (11 a) comprises a sealing profile (13).

## Revendications

1. Soufflet ou demi-soufflet d'un passage entre deux véhicules liés de manière articulée, dans lequel ledit soufflet (4) comporte un cadre de couplage (10) pour se coupler au côté frontal d'un véhicule ou à se coupler à un autre cadre de couplage (10), dans lequel le cadre de couplage (10) comporte plusieurs dispositifs de couplage (20) répartis sur la périphérie et qui peuvent être actionnés individuellement, et dans lequel le dispositif de couplage (20) comporte un organe pivotant (21), **caractérisé en ce que** l'organe pivotant (21) comporte un guide excentrique (22, 23, 24) agencé pour recevoir la tête sphérique (31) d'un boulon de couplage (30), le boulon de couplage (30) étant attiré et verrouillé dans le cadre de couplage (10) après une rotation d'environ 180° de l'organe pivotant (21).

2. Soufflet ou demi-soufflet selon la revendication 1,
**caractérisé en ce que**
le guide excentrique comporte un trou allongé (22) correspondant au diamètre de la tête sphérique (31) du boulon de couplage (30), auquel fait suite une cavité sphérique (23) agencée pour recevoir la tête sphérique (31), la cavité (23) étant disposée dans l'organe pivotant (21) de façon décentrée par rapport à l'axe longitudinal médian (50), tandis que, des deux côtés du trou allongé (22) et de la cavité (23), sont prévues des mâchoires (24) qui s'étendent sur une partie du diamètre de la tête sphérique (31) et qui recouvrent donc la tête sphérique (31) au moins partiellement en fourche.

3. Soufflet ou demi-soufflet selon l'une des revendications précédentes,
**caractérisé en ce que**,
dans l'état déverrouillé, la cavité (23) se trouve plus près du cadre de couplage (10) voisin, à coupler, ou du côté frontal (2a) du véhicule (2), que du côté du soufflet (4).

4. Soufflet ou demi-soufflet selon l'une des revendications précédentes,
**caractérisé en ce que**
l'organe pivotant (21) comporte un bossage de manoeuvre (25), par exemple un carré, pour un outil correspondant.

5. Soufflet ou demi-soufflet selon l'une des revendications précédentes,
**caractérisé en ce que**
le cadre de couplage (10) comporte au moins une fixation (11a) pour le soufflet (4).

6. Soufflet ou demi-soufflet selon la revendication 5,
**caractérisé en ce que**
la fixation (11 a) comporte un profilé d'étanchéité (13).
